# FASCICULE DE BREVET EUROPEEN

(11) **EP 2 102 665 B1**
(45) Date de publication et mention de la délivrance du brevet: **27.03.2013**
(21) Numéro de dépôt: 07847770.0
(22) Date de dépôt: 04.12.2007
(51) Int. Cl.: G01P 15/10, G01P 15/097

(54) **LAME DE GUIDAGE DE MASSE D'EPREUVE ET SYSTEME ELECTROMECANIQUE MICRO-USINE COMPORTANT UNE TELLE LAME**
FÜHRUNGSKLINGE FÜR EINE PRÜFMASSE UND EINE SOLCHE KLINGE VERWENDENDES MIKROBEARBEITETES ELEKTROMECHANISCHES SYSTEM
GUIDING BLADE FOR A PROOF MASS AND MICROMACHINED ELECTROMECHANICAL SYSTEM USING SUCH BLADE

(30) Priorité: 20.12.2006 FR 0611084
(43) Date de publication de la demande: 23.09.2009
(73) Titulaire: Thales, 92200 Neuilly Sur Seine (FR)
(72) Inventeur: BOURA, André, 86100 Chatellerault (FR)
(74) Mandataire: Esselin, Sophie
(86) Numéro de dépôt international: PCT/EP2007/063267
(87) Numéro de publication internationale: WO 2008/074631

(56) Documents cités:
- WO-A-92/08139
- FR-A1- 2 848 298
- US-A- 3 902 374
- US-A- 4 104 920
- US-A- 4 891 982

## Description

Le domaine de l'invention est celui des systèmes électromécaniques micro-usinés comportant une masse d'épreuve susceptible de se déplacer.

L'invention concerne plus particulièrement une lame de guidage d'un tel système électromécanique, confinant un mouvement de la masse d'épreuve suivant une direction appelée aussi « axe sensible » du système électromécanique.

L'invention a également pour objet des systèmes électromécaniques micro-usinés dans une plaque plane comprenant une base et au moins une cellule de mesure, qui comprend au moins une masse d'épreuve et au moins une lame de guidage reliant la masse d'épreuve et une partie fixée à la base et agissant sur le mouvement de la masse d'épreuve. Le fonctionnement de ces systèmes est fondé en général sur une mesure d'une force d'inertie.

Des systèmes électromécaniques monolithiques plats, par exemple des accéléromètres micro-usinés dans une plaque de silicium, comportent classiquement un corps ayant une base et une cellule de mesure et parfois deux cellules de mesure en vue de la mise en oeuvre d'un procédé différentiel. Une cellule de mesure comprend typiquement une masse d'épreuve reliée d'une part à la base et d'autre part à un capteur de force, lui-même également relié à la base. Lorsque le système est soumis à une accélération suivant l'axe sensible qui est la direction de l'accélération à mesurer, la masse d'épreuve est soumise à une force d'inertie qui est transmise au capteur de force par des moyens permettant éventuellement d'amplifier la force transmise.

Dans la demande de brevet FR 02 15599, on décrit un accéléromètre dont les moyens de mesure comportent un résonateur qui peut être une poutre vibrante.

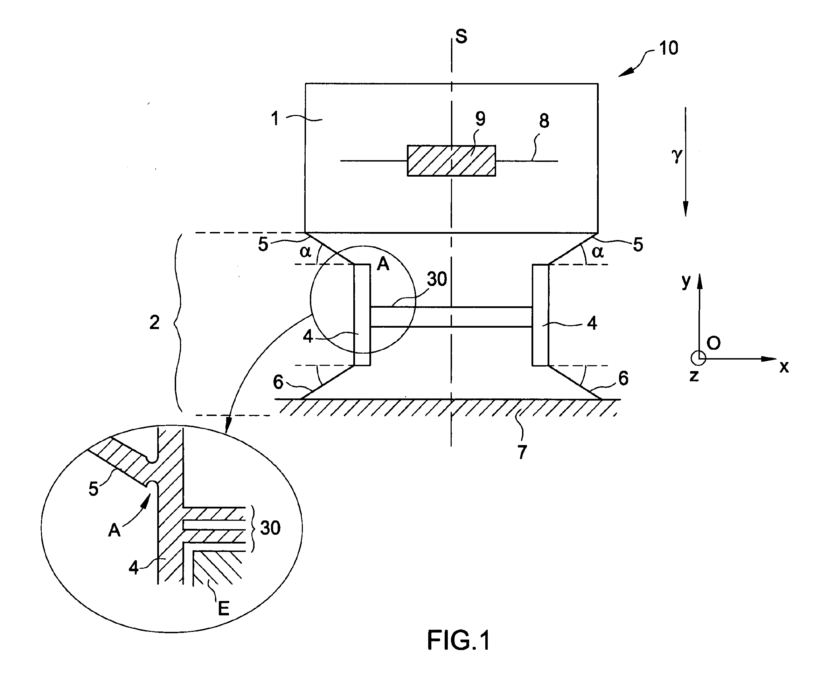

Dans la suite, on va prendre comme exemple de résonateur deux poutres formant diapason, que l'on fait vibrer en opposition de phase au moyen de deux électrodes. C'est cette configuration en diapason qui est représentée sur la figure 1. On pourrait tout aussi bien utiliser comme moyen de mesure d'autres structures de résonateur ou une balance de forces. Un accéléromètre à poutres vibrantes comporte de préférence deux cellules de mesures qui peuvent être réalisées par micro-usinage d'un substrat de silicium sur isolant (SOI) ou de quartz ou d'un autre matériau, mais d'autres méthodes sont également possibles.

Un substrat de silicium sur isolant est constitué d'une plaque de silicium éventuellement monocristallin de quelques centaines de micromètres d'épaisseur (450 micromètres par exemple) constituant la base de l'accéléromètre, qui porte sur sa face avant une fine couche d'oxyde de silicium de quelques micromètres d'épaisseur (2 micromètres par exemple) elle-même recouverte d'une couche de silicium de quelques dizaines de micromètres d'épaisseur (60 micromètres par exemple), le silicium pouvant être lui aussi éventuellement monocristallin.

L'usinage consiste à attaquer les couches de silicium par leur face externe en direction de la couche d'oxyde, avec un procédé de gravure sélectif qui attaque le silicium sans attaquer significativement l'oxyde. On interrompt la gravure lorsque la couche d'oxyde est mise à nu. Cette couche d'oxyde peut elle-même être enlevée localement par attaque sélective par un autre procédé de manière à conserver une liaison entre les deux couches de silicium uniquement en quelques endroits choisis, et obtenir ainsi la structure plane mobile désirée.

Par la suite on utilisera un repère O,x,y,z. Le plan de la figure 1 est le plan O,x,y, l'axe Oz représentant la direction perpendiculaire à ce plan. On désigne par axe Ox (respectivement Oy, Oz) un axe parallèle à l'axe Ox (respectivement Oy, Oz) représenté sur la figure.

La structure plane mobile 10 d'une cellule de mesure de l'accéléromètre, schématiquement représentée figure 1, comporte une masse d'épreuve 1 mobile susceptible de se déplacer en translation selon l'axe sensible de l'accéléromètre désigné axe Oy, qui est parallèle à l'accélération y à mesurer, et des moyens d'amplification 2 de la force limitant cette translation. Cette force est mesurée au moyen de deux poutres vibrantes 30 placées selon un axe Ox perpendiculaire à l'axe Oy, qui subissent une traction ou une compression selon le sens de l'accélération. Les poutres sont disposées symétriquement par rapport à un axe de symétrie S de la structure, cet axe de symétrie étant parallèle à l'axe Oy et passant par le centre de gravité de la masse.

Les poutres vibrantes 30 sont encastrées à chaque extrémité dans une terminaison 4 rigide. Chacune de ces terminaisons 4 comporte une paire de bras micro-usinés. Les deux paires sont symétriques par rapport à l'axe de symétrie S. Un premier bras 5 micro-usiné relie la terminaison 4 à la masse d'épreuve 1. Un deuxième bras 6 micro-usiné, symétrique du premier bras par rapport à l'axe de la poutre, relie la terminaison 4 à un pied d'ancrage 7 fixé à la base. Ces bras 5 et 6 sont respectivement reliés à la masse d'épreuve, à la terminaison 4 et au pied d'ancrage 7, par des points d'attache. L'épaisseur d'un bras 5 ou 6 peut varier sur sa longueur.

On a également schématiquement représenté figure 1 un zoom sur une partie des moyens d'amplification. Le premier bras 5 est articulé sur la terminaison 4 par un point d'attache A. On a également représenté une partie d'électrode E. Les deux poutres vibrantes 30 sont encastrées dans la terminaison 4 dans la mesure où elles sont formées par gravure par exemple de la même couche de matière. Les hachures représentent la matière, du silicium monocristallin par exemple dans le cas d'une cellule réalisée par usinage d'un SOI. Comme indiqué précédemment, les motifs de surface tels que les bras 5, point d'attache A, terminaison 4, poutres 30 et électrode E ont été obtenus par gravure du silicium monocristallin, puis par attaque de la couche d'oxyde.

L'angle α formé par l'axe Ox et la ligne joignant les points d'attache A et B du premier bras 5 qui, en raison de la symétrie des bras 5 et 6 par rapport à l'axe reliant les terminaisons par leur milieu, est symétrique de l'angle formé par l'axe Ox et la ligne joignant les points d'attache du deuxième bras 6. Cet angle α est relativement faible et la force exercée en traction ou en compression sur les poutres 30 est supérieure à la force d'inertie générée par la masse d'épreuve 1 en présence d'une accélération sensible dirigée selon l'axe Oy.

Ces moyens d'amplification 2 permettent en outre de libérer de l'espace autour des poutres vibrantes 30, notamment pour placer les électrodes dans le cas d'une excitation électrostatique. On rappelle que les poutres vibrantes sont mises en vibration à leur fréquence de résonance à l'aide d'électrodes disposées en regard de ces poutres, ou directement sur les poutres, suivant qu'il s'agit d'une excitation électrostatique ou piézo-électrique.

La masse d'épreuve 1 est partiellement guidée en translation selon l'axe Oy par la symétrie de la structure. Pour ne conserver uniquement un degré de liberté de translation suivant l'axe Oy, on peut éventuellement limiter les translations de la masse d'épreuve selon Ox et Oz ainsi que des rotations en employant une ou des lames de guidage 8 orientées suivant l'axe Ox. Une première extrémité de cette lame 8, est fixée à la masse d'épreuve 1, une deuxième extrémité de cette lame 8, est fixée à une partie 9, fixée à la base. Classiquement, les lames de guidage 8, ont une forme d'un parallélépipède rectangle dont le plus grand de coté est placé suivant l'axe Ox.

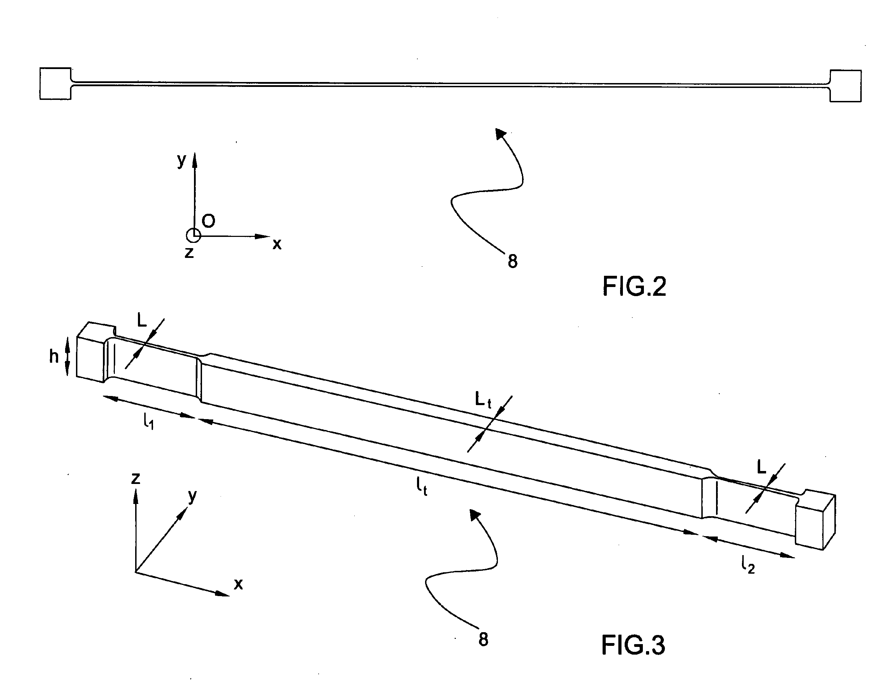

La figure 2 représente, en vue de dessus, c'est à dire suivant une projection dans le plan O,x,y, une lame de guidage 8 selon l'art antérieur d'un système électromécanique plat micro-usiné dans une plaque de silicium monocristallin d'épaisseur constante h. La lame de guidage 8 comporte deux ancrages et un tronçon : un premier ancrage est intégré à la masse d'épreuve 1, un deuxième ancrage est intégré à la base.

On l'a dit plus haut, le tronçon d'une lame de guidage de l'art antérieur a une forme de parallélépipède rectangle. Le parallélépipède formé par le tronçon de la lame 8 possède une épaisseur suivant l'axe Oz égale à l'épaisseur du substrat dans lequel le système électromécanique est usiné ; par exemple h est égal à 60 micromètres.

Le parallélépipède possède également une longueur, suivant l'axe Ox, égale à I₁, par exemple I₁ est de l'ordre de 700 micromètres, et une largeur suivant l'axe Oy égale à L, par exemple L est proche de 5 micromètres.

Il est nécessaire que la largeur L soit très réduite afin de présenter une très faible résistance à un mouvement de la masse d'épreuve 1 dans la direction Oy. On donne en général à la largeur L une valeur qui est le minimum atteignable avec les technologies disponibles d'usinage du substrat.

Les dimensions de la lame de guidage 8 lui confèrent une valeur de coefficient de raideur suivant l'axe Oy, k_{y}, extrêmement faible, typiquement inférieure de deux ordres de grandeur à la raideur suivant l'axe Oy du dispositif de mesure de la force d'inertie. Revers de la médaille, une poutre de guidage qui a une telle géométrie possède une charge critique de flambage très faible selon l'axe Ox, correspondant typiquement à une accélération de l'ordre de 1000 g suivant l'axe Ox, c'est à dire égale à mille fois l'accélération de la pesanteur à la surface terrestre. Ceci interdit donc l'emploi d'une telle lame de guidage dans un système électromécanique micro-usiné qui serait soumis à des accélérations de l'ordre de 20000 g suivant l'axe Ox car dans ce cas un phénomène de flambage prendrait naissance, et la lame de guidage serait très fortement déformée et selon toute vraisemblance endommagée.

Pour résister à une telle accélération suivant l'axe Ox, il serait nécessaire que la largeur L de la lame suivant Oy ait une valeur élevée, par exemple supérieure à 50 micromètres pour une longueur suivant J'axe Ox inchangée afin de présenter une charge critique de flambage élevée suivant l'axe Ox, ce qui est incompatible avec une raideur faible suivant l'axe Oy.

La lame de guidage selon l'art antérieur, par exemple lorsqu'elle a une forme sensiblement parallélépipédique a une forme qui la rend inadaptée à un fonctionnement sous une accélération de valeur très élevée suivant l'axe Ox.

Le but de l'invention est de pallier cet inconvénient. Plus précisément l'invention a pour objet une lame de guidage d'une masse d'épreuve mobile d'un système électromécanique micro-usiné dans une plaque d'épaisseur h formant un plan O,x,y, le système électromécanique comportant une base et au moins une cellule de mesure comprenant la masse d'épreuve reliée à la base par au moins une lame de guidage et susceptible de se déplacer en translation suivant un axe Oy, ladite lame étant disposée suivant un axe Ox et reliée à une partie fixée à la base, ladite lame limitant un mouvement de la masse d'épreuve suivant l'axe Ox, M étant un point positionné sur la lame, un axe Oz étant normal au plan O,x,y et passant par la position du point M, un plan M,y,z étant un plan normal à l'axe Ox et passant la position du point M, ladite lame étant monolithique et possédant une longueur totale suivant l'axe Ox égale à L_{L}, une zone centrale de la lame étant définie par une longueur supérieure ou égale à 15% de la longueur totale L_{L} centrée autour d'un centre géométrique C de la lame, caractérisé en ce qu'une section SM de la lame suivant le plan M,y,z possède une inertie par rapport à l'axe Oz qui a une valeur variable en fonction de la position M et en ce que, pour des points M positionnés dans la zone centrale de la lame, la section SM possède une inertie par rapport à l'axe Oz qui a une valeur supérieure à une moyenne des inerties par rapport à l'axe Oz des sections SM de la lame pour tous les points appartenant à la lame.

Selon une variante de l'invention, la lame de guidage est composée par une succession :
- d'un premier tronçon charnière, de forme sensiblement parallélépipédique qui possède une épaisseur suivant l'axe Oz égale à h, une longueur suivant l'axe Ox égale à I₁ et une largeur suivant l'axe Oy égale àL;
- d'un tronçon central qui possède une épaisseur suivant l'axe Oz égale à h, une longueur suivant l'axe Ox égale à I₁, et une largeur suivant l'axe Oy égale à Lₜ;
- d'un deuxième tronçon charnière de forme sensiblement parallélépipédique qui possède une épaisseur suivant l'axe Oz égale à h, une longueur suivant l'axe Ox égale à I₂, et une largeur suivant l'axe Oy égale à L.

Selon une variante de l'invention, le rapport entre la largeur Lₜ du tronçon central suivant l'axe Oy et la largeur L du premier tronçon charnière et/ou celle du deuxième tronçon charnière est d'au moins 5.

Selon une variante de l'invention, la largeur Lₜ est de l'ordre de 40 microns, la largeur L étant de l'ordre de 5 microns.

Selon une variante de l'invention, il existe environ un ordre de grandeur entre la somme des longueurs des tronçons et la longueur des premier et second tronçons charnière.

Selon une variante de l'invention, la longueur des premier et second tronçons est de l'ordre de 80 microns, la somme des longueurs des tronçons étant de l'ordre de 1000 microns.

Un premier avantage de la lame de guidage selon l'invention tient en ce qu'elle supporte sans flamber une accélération suivant l'axe Ox pouvant dépasser 20000 g.

Un deuxième avantage de la lame de guidage selon l'invention tient dans ce qu'elle comporte des tronçons charnières qui ont une largeur minimale atteignable avec les technologies d'usinage actuelle et en ce qu'elle possède une longueur totale qui est supérieure à la longueur maximale que ces technologies d'usinage autorisent avec cette largeur minimale. Ainsi, pour une longueur totale de lame égale à celle d'une lame de l'art antérieur, une lame selon l'invention supporte, sans flamber, une accélération suivant l'axe Ox, qui est supérieure d'un rapport de l'ordre de quinze à celle supportée par une lame l'art antérieur au prix d'un surcroît de rappel élastique toujours suivant l'axe Oy qui reste limité à moins de deux fois celui d'une lame de l'art antérieur de même longueur totale.

Un troisième avantage de la lame de guidage selon l'invention permet d'éliminer le surcroît de rappel élastique lorsque l'encombrement dévolu à la lame le permet, en effet la valeur d'un coefficient de raideur suivant l'axe Oy k_{y} d'une lame selon l'invention est réduite par allongement la lame. Par exemple, la valeur d'un coefficient de raideur suivant l'axe Oy k_{y} d'une lame selon l'invention ayant une longueur de l'ordre de 1000 micromètres, comportant des tronçons charnières de longueur de l'ordre de 80 micromètres est du même ordre de grandeur que celle d'une lame de l'art antérieur de longueur 700 micromètres.

L'invention concerne également un système électromécanique micro-usiné dans une plaque d'épaisseur h formant un plan O,x,y, le système électromécanique comportant une base et au moins une cellule de mesure comprenant une masse d'épreuve reliée à la base par au moins une lame de guidage de la masse d'épreuve selon l'invention, caractérisé en ce que le système est monolithique.

D'autres caractéristiques et avantages de l'invention apparaîtront à la lecture de la description détaillée qui suit, faite à titre d'exemple non limitatif et en référence aux dessins annexés dans lesquels :
la figure 1, déjà décrite, représente schématiquement une structure de cellule de mesure d'un accéléromètre, dans laquelle la masse d'épreuve est relié à une base par deux lames de guidage ;
la figure 2, déjà décrite, représente une vue de dessus d'une lame de guidage de l'art antérieur ;
la figure 3 représente une vue perspective d'un mode de réalisation d'une lame de guidage selon l'invention ;
la figure 4 représente une vue de dessus du mode de réalisation d'une lame de guidage selon l'invention ;

D'une figure à l'autre, les mêmes éléments sont repérés par les mêmes références.

La figure 3 représente une vue perspective d'un mode de réalisation d'une lame de guidage selon l'invention. Cette lame 8, est usinée dans un substrat d'épaisseur constante, fait partie d'une structure monolithique et elle est composée par une succession :
- d'un premier tronçon charnière, de forme sensiblement parallélépipédique qui possède une épaisseur suivant l'axe Oz égale à h, une longueur suivant l'axe Ox égale à I₁ et une largeur suivant l'axe Oy égale à L;
- d'un tronçon central qui possède une épaisseur suivant l'axe Oz égale à h, une longueur suivant l'axe Ox égale à Iₜ, et une largeur suivant l'axe Oy égale à Lₜ;
- d'un deuxième tronçon charnière de forme sensiblement parallélépipédique qui possède une épaisseur suivant l'axe Oz égale à h, une longueur suivant l'axe Ox égale à I₂, et une largeur suivant l'axe Oy égale à L.

En outre, la lame de guidage 8 comporte deux ancrages disposés sur deux extrémités de la lame : un premier ancrage est intégré à la masse d'épreuve 1, un deuxième ancrage est intégré à la base.

Par exemple, h est égal à 60 micromètres, I₁ et I₂ sont égales à 80 micromètres, L est égal à 5 micromètres, Lₜ est égal à 40 micromètres et Lₜ est égal à 660 micromètres.

En résumé, la lame de guidage 8 selon l'invention comporte un premier et un deuxième tronçon charnière qui ont chacun la largeur minimale qu'il est possible d'atteindre avec les technologies d'usinage du silicium disponibles, soit de l'ordre de 5 micromètres.

La lame de guidage possède, en outre, une longueur totale L_{L} qui vaut environ 820 micromètres mais qui peut être supérieure à la longueur maximale que ces mêmes technologies d'usinage permettent d'atteindre pour une pièce ayant cette largeur minimale suivant l'axe Oy.

Avantageusement, l'axe Ox et l'axe Oy sont orthogonaux.

Avantageusement, la largeur Lₜ du tronçon central est supérieure à la largeur L du premier tronçon charnière et du deuxième tronçon charnière.

Lorsque la structure subit une accélération suivant l'axe Oy, la lame de guidage se déforme légèrement en flexion double, le premier tronçon charnière et le deuxième tronçon charnière ayant chacun une courbure de signe opposé. L'invention consiste à rigidifier la lame à proximité du centre géométrique C de la lame, c'est à dire à augmenter l'inertie de la lame dans une zone centrale centrée autour du centre géométrique C.

La charge critique de flambage est ainsi considérablement accrue (multipliée par environ 18), grâce à l'accroissement de l'épaisseur de la partie centrale d'une part et au raccourcissement des tronçons de faible épaisseur restant en place à chaque extrémité d'autre part.

Une poutre telle que celle illustrée sur la figure 3 possède une souplesse certaine dans la direction Y, malgré la faible longueur des tronçons amincis d'extrémité, parce que ces tronçons sont les zones les plus sollicitées dans une translation de la masse d'épreuve dans la direction Y. Cette souplesse n'est pas tout à fait aussi importante que pour une poutre uniformément fine sur toute sa longueur (elle est amoindrie d'un facteur de l'ordre de 1.8 pour les valeurs citées). On peut éventuellement compenser cette perte de souplesse en allongeant la partie épaisse de la poutre de section variable. La déformation coopérative en flexion des extrémités permet alors de retrouver la souplesse initiale au guidage réalisé.

Dans le cas où l'encombrement n'est pas limité, le choix d'une configuration semblable à celle de la figure 3 permet de multiplier la charge critique de flambage par un facteur de l'ordre de 20, en conservant la même souplesse dans la direction Y, au prix d'un accroissement de la longueur totale de la poutre de guidage de l'ordre de 30 %.

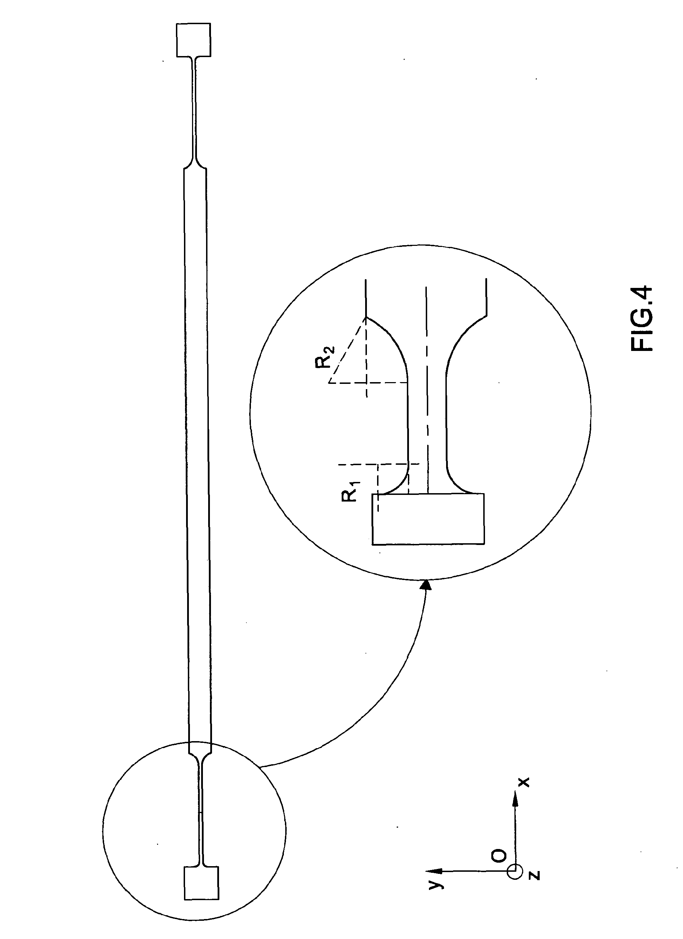

Pour le mode de réalisation de la lame présenté sur les figures 3 et 4, une augmentation de l'inertie consiste à doter le tronçon central de la lame d'une largeur Lₜ suivant l'axe Oy qui est supérieure à la largeur L du premier et du deuxième tronçon charnière.

Le surcroît de masse apporté par cet élargissement du tronçon central peut être réduit par des perçages judicieusement placés dans le tronçon central.

Avantageusement, la zone centrale de la lame comporte des perçages.

Avantageusement, la lame de guidage selon l'invention est symétrique par rapport à un axe parallèle à l'axe Oy et passant par le centre géométrique C de la lame..

Avantageusement, des premiers congés de rayon R₁ raccordent le premier tronçon charnière et le tronçon central et en ce que des deuxièmes congés de rayon R₂ raccordent le deuxième tronçon charnière et le tronçon central.

Avantageusement, le système électromécanique micro-usiné est un accéléromètre résonnant.

Avantageusement, le système électromécanique micro-usiné est un gyromètre vibrant.

## Revendications

1. Lame de guidage d'une masse d'épreuve mobile (1) d'un système électromécanique micro-usiné dans une plaque d'épaisseur h formant un plan O,x,y, le système électromécanique comportant une base et au moins une cellule de mesure permettant de mesurer des efforts agissant sur une masse d'épreuve (1) dans la direction Oy, ladite masse d'épreuve (1) étant susceptible de se déplacer en translation dans la direction Oy, et reliée à la base par au moins une lame de guidage (8), ladite lame étant disposée parallèlement à un axe Ox orthogonal à l'axe Oy et reliée à une partie (9) fixée à la base, ladite lame (8) étant monolithique et limitant un déplacement de ladite masse d'épreuve (1) dans la direction Ox par déformation de ladite lame en traction ou en compression selon cette direction, **caractérisée en ce qu'**elle comporte, à proximité de chacune de ses extrémités, un tronçon charnière d'épaisseur réduite dans la direction Oy permettant de limiter la raideur rencontrée par la masse d'épreuve se déplaçant dans la direction Oy par déformation coopérative en flexion double desdits tronçons charnières dans la direction Oy de mesure de la force d'inertie, lesdits tronçons d'épaisseur réduite L entourant un tronçon central d'épaisseur Lₜ supérieure dans la direction Oy.

2. Lame de guidage selon la revendication 1, **caractérisée en ce que** la zone centrale de la lame comporte des perçages.

3. Lame de guidage selon la revendication 2, **caractérisée en ce qu'**elle est symétrique par rapport à un axe parallèle à l'axe Oy et passant par un centre géométrique C de ladite lame.

4. Lame de guidage selon la revendication 3, **caractérisée en ce que** le tronçon central comporte des perçages.

5. Lame de guidage selon l'une des revendications 2 à 4, **caractérisée en ce que** des premiers congés de rayon R₁ raccordent le premier tronçon charnière et le tronçon central et **en ce que** des deuxièmes congés de rayon R₂ raccordent le deuxième tronçon charnière et le tronçon central.

6. Système électromécanique micro-usiné dans une plaque d'épaisseur h formant un plan O,x,y, le système électromécanique comportant une base et au moins une cellule de mesure comprenant une masse d'épreuve (1) reliée à la base par au moins une lame de guidage (8) de la masse d'épreuve (1) selon l'une des revendications 1 à 6, **caractérisé en ce que** le système est monolithique.

7. Système électromécanique micro-usiné, selon la revendication 6, **caractérisé en ce qu'**il est un accéléromètre résonnant.

8. Système électromécanique micro-usiné selon la revendication 6 ou 7, **caractérisé en ce qu'**il est un gyromètre vibrant.

## Claims

1. A guiding blade for a mobile proof mass (1) of an electromechanical system micro-machined in a plate of thickness h forming a plane O, x, y, said electromechanical system comprising a base and at least one measuring cell allowing the forces acting on a proof mass (1) to be measured in the direction Oy, said proof mass (1) tending to move by translation in the direction Oy and being linked to said base by at least one guiding blade (8), said blade being disposed parallel to an axis Ox that is orthogonal to the axis Oy and is connected to a part (9) that is fixed to said base, said blade (8) being monolithic and limiting a displacement of said proof mass (1) in the direction Ox by deforming said blade by traction or by compression in said direction, **characterised in that** it comprises, within the vicinity of each of its ends, a hinged section of reduced thickness in the direction Oy that limits the rigidity that is encountered by said proof mass moving in the direction Oy by co-operative deformation by double bending of said hinged sections in the direction Oy of measurement of the inertial force, said sections of reduced thickness L surrounding a central section of thickness Lₜ that is greater in the direction Oy.

2. The guiding blade according to claim 1, **characterised in that** the central zone of said blade comprises piercings.

3. The guiding blade according to claim 2, **characterised in that** it is symmetrical relative to an axis parallel to the axis Oy and passes through a geometric centre C of said blade.

4. The guiding blade according to claim 3, **characterised in that** the central section comprises piercings.

5. The guiding blade according to any one of claims 2 to 4, **characterised in that** first grooves of radius R₁ connect the first hinged section and the central section and **in that** second grooves of radius R₂ connect the second hinged section and the central section.

6. An electromechanical system micro-machined in a plate of thickness h forming a plane O, x, y, said electromechanical system comprising a base and at least one measuring cell comprising a proof mass (1) that is connected to said base by at least one guiding blade (8) of said proof mass (1) according to any one of claims 1 to 6, **characterised in that** said system is monolithic.

7. The micro-machined electromechanical system according to claim 6, **characterised in that** it is a resonant accelerometer.

8. The micro-machined electromechanical system according to claim 6 or 7, **characterised in that** it is a vibrating gyrometer.

## Patentansprüche

1. Führungsklinge für eine bewegliche Prüfmasse (1) eines elektromechanischen Systems, das in eine Platte mit einer Dicke h mikrogearbeitet wurde, die eine Ebene O, x, y bildet, wobei das elektromechanische System eine Basis und wenigstens eine Messzelle umfasst, die das Messen der auf eine Prüfmasse (1) in der Richtung Oy wirkenden Kräfte zulässt, wobei die Prüfmasse (1) zu einer translationalen Bewegung in Richtung Oy neigt und durch wenigstens eine Führungsklinge (8) mit der Masse verbunden ist, wobei die Klinge parallel zu einer Achse Ox orthogonal zur Achse Oy angeordnet und mit einem an der Basis befestigten Teil (9) verbunden ist, wobei die Klinge (8) monolithisch ist und eine Verschiebung der Prüfmasse (1) in Richtung Ox durch Zug- oder Druckverformung der Klinge in dieser Richtung begrenzt, **dadurch gekennzeichnet, dass** sie in der Nähe jedes ihrer Enden eine Gelenksektion von reduzierter Dicke in Richtung Oy hat, die die Steifigkeit begrenzt, die die Prüfmasse erfährt, die sich in Richtung Oy durch kooperative Doppelbiegeverformung der Gelenksektionen in der Trägheitskraft-Messrichtung Oy bewegt, wobei die Sektionen mit reduzierter Dicke L eine zentrale Sektion der Dicke Lₜ umgeben, die in Richtung Oy größer ist.

2. Führungsklinge nach Anspruch 1, **dadurch gekennzeichnet, dass** die zentrale Zone der Klinge Perforationen aufweist.

3. Führungsklinge nach Anspruch 2, **dadurch gekennzeichnet, dass** sie zu einer Achse parallel zur Achse Oy symmetrisch ist und durch einen geometrischen Mittelpunkt C der Klinge verläuft.

4. Führungsklinge nach Anspruch 3, **dadurch gekennzeichnet, dass** die zentrale Sektion Perforationen aufweist.

5. Führungsklinge nach einem der Ansprüche 2 bis 4, **dadurch gekennzeichnet, dass** erste Nuten mit Radius R₁ die erste Gelenksektion und die zentrale Sektion verbinden, und dadurch, dass zweite Nuten mit Radius R₂ die zweite Gelenksektion und die zentrale Sektion verbinden.

6. Elektromechanisches System, das in eine Platte mit Dicke h mikrogearbeitet wurde, die eine Ebene O, x, y bildet, wobei das elektromechanische System eine Basis und wenigstens eine Messzelle umfasst, die eine Prüfmasse (1) aufweist, die mit der Basis durch wenigstens eine Führungsklinge (8) der Prüfmasse (1) nach einem der Ansprüche 1 bis 6 verbunden ist, **dadurch gekennzeichnet, dass** das System monolithisch ist.

7. Mikrobearbeitetes elektromechanisches System nach Anspruch 6, **dadurch gekennzeichnet, dass** es ein resonanter Beschleunigungsmesser ist.

8. Mikrobearbeitetes elektromechanisches System nach Anspruch 6 oder 7, **dadurch gekennzeichnet, dass** es ein vibrierendes Gyrometer ist.
